(19) Europäisches Patentamt
European Patent Office
Office européen des brevets

(11) **EP 1 167 080 B1**

(12) **FASCICULE DE BREVET EUROPEEN**

(45) Date de publication et mention
de la délivrance du brevet:
**03.01.2007 Bulletin 2007/01**

(51) Int Cl.:
**B60C 9/18** *(2006.01)*    **B60C 17/00** *(2006.01)*

(21) Numéro de dépôt: **01113978.9**

(22) Date de dépôt: **08.06.2001**

(54) **Bandage renforcé par un élément composite, ainsi qu'un tel élément**

Reifen der mit einem Verbundelement verstärkt ist, und Verbundelement

Pneumatic tyre reinforced by composite element and such composite element

(84) Etats contractants désignés:
**AT BE CH CY DE DK ES FI FR GB GR IE IT LI LU MC NL PT SE TR**

(30) Priorité: **22.06.2000 FR 0008115**

(43) Date de publication de la demande:
**02.01.2002 Bulletin 2002/01**

(73) Titulaire: **Conception et Développement Michelin S.A.**
**1762 Givisiez (CH)**

(72) Inventeur: **Meraldi, Jean-Paul**
**8049 Zürich (CH)**

(74) Mandataire: **Bauvir, Jacques**
**Michelin & Cie,**
**Service SGD/LG/PI-LAD**
**63040 Clermont-Ferrand Cedex 09 (FR)**

(56) Documents cités:
| | |
|---|---|
| **EP-A- 0 475 745** | **US-A- 3 516 465** |
| **US-A- 3 608 606** | **US-A- 3 682 217** |
| **US-A- 3 918 506** | **US-A- 4 506 717** |

EP 1 167 080 B1

Printed by Jouve, 75001 PARIS (FR)

## Description

L'invention concerne un pneumatique ou une roue élastique non pneumatique en élastomère renforcé. L'invention vise notamment à substituer aux câbles, notamment à ceux en acier ou en aramide utilisés pour renforcer des pneumatiques, un nouvel élément de renforcement.

Un élément de choix, largement utilisé pour renforcer les pneumatiques est le câble d'acier. On sait que la technique de câblage permet à l'élément de renforcement d'accéder à des rayons de courbure relativement faibles tout en lui permettant de supporter des sollicitations importantes. Un grand nombre de fils élémentaires de petite section sont assemblés de façon à ce que, malgré une section cumulée suffisamment importante pour atteindre le potentiel de résistance recherché, chaque section individuelle reste suffisamment faible pour autoriser des rayons de courbures petits sans atteindre des déformations plastiques permanentes.

Le recours à un assemblage d'éléments de faible section permet aussi dans le cas de l'acier de limiter la rigidité de flexion. La rigidité de flexion est le produit du module de Young par le moment d'inertie de la section.

Beaucoup d'autres matières sont utilisées, notamment des matières textiles. On peut citer la rayonne, le Nylon ou pour citer une matière plus moderne, l'aramide. Mais la plupart des utilisations ne permettent pas d'éviter de devoir assembler plusieurs fils de faible section pour pouvoir atteindre des performances de transmission d'efforts et d'aptitude à la déformation requises. Malheureusement, le fait de recourir à un assemblage, le plus souvent par retordage dans le cas du textile, limite les propriétés de module en extension et ne confère pas ou peu de rigidité de flexion à l'assemblage. Par contre, la taille microscopique des filaments élémentaires qui constituent les filés textiles permet de subir des rayons de courbure relativement petits. Si, dans la ceinture d'un pneu radial, les retors textiles procurent un gain de poids bénéfique à certains aspects de la résistance au roulement et éliminent les problèmes de corrosion, leur manque de rigidité en flexion, et dans certains cas de module en extension, ne permet pas de garantir l'excellente stabilité de guidage et la résistance à l'usure de la ceinture en acier.

Au lieu d'éléments de renforcement en acier, il a déjà été proposé, par exemple dans la demande de brevet EP 0 475 745, d'utiliser un élément composite longiligne textile ayant essentiellement les caractéristiques suivantes : l'élément longiligne doit être de forme elliptique ou rectangulaire ; il comprend des fibres choisies parmi l'aramide, le verre, le P.V.A. et le carbone ; le module initial d'extension de la résine d'imprégnation utilisée ne doit pas dépasser 1,5 GPa. Le critère de sélection de ces fibres proposé est une ténacité élevée (force de rupture spécifique), supérieure à 15 g/denier (ou 136 g/tex). Cependant, l'aramide, le P.V.A. et partiellement le carbone, au contraire du verre, présentent une faiblesse intrinsèque notoire de tenue à la compression. Cet inconvénient se manifeste notamment dans l'application de ces fibres au renforcement des pneumatiques, et provient de leur faiblesse notoire de tenue à la compression. Sans doute pour tenter de pailer cet inconvénient, il est proposé d'associer ces fibres à une résine de faible rigidité, ce qui pour une courbure donnée imposée à l'élément composite longiligne, sollicite moins ledit élément. Ce choix pose cependant quelques problèmes car on ne peut suffisamment garantir, pendant toute la vie du pneu, une tenue à la compression suffisante pour des éléments de renforcement de ceinture, fortement sollicités en flexion particulièrement aux bords des nappes de triangulation dans la ceinture.

Pour augmenter la rigidité de flexion, on peut faire appel à des produits textiles polymériques de haut module de Young sous forme de monofilaments, par exemple des monofilaments en aramide d'un diamètre de l'ordre du dixième de millimètre ou quelques dixièmes de millimètre, et les câbler à l'instar des fils d'acier. A titre d'illustration, citons le brevet WO92/12018. Cependant, le très faible seuil critique intrinsèque de compression de ce type de produit, défini comme la déformation maximale en compression avant effondrement de la structure, rend l'assemblage très fragile vis-à-vis des sollicitations en compression. Il peut en résulter une dégradation rapide et irréversible en compression des assemblages. D'où la grande difficulté d'utiliser autre chose que de l'acier pour des nappes de triangulation dans la ceinture des pneumatiques, car la dérive d'un pneu provoque une flexion sur chant de la ceinture située sous la bande de roulement, ce qui sollicite en compression certaines parties des éléments de renforcement.

Une autre manière d'utiliser les fibres textiles à haut module et haute ténacité (fibres en aramide, en polyester aromatique -par exemple Vectran-, polybenzobisoxazole) consiste à réaliser un composite unidirectionnel longiligne utilisé sans câblage ou opération équivalente. Selon la teneur en volume de l'élément de renforcement, il est possible d'obtenir un module de Young supérieur à celui d'un retors textile. Le module de flexion est très proche du module d'extension et il existe une véritable rigidité de flexion, modulable en fonction du choix de la taille et de la forme de la section. De tels produits ont cependant une faiblesse intrinsèque en compression, c'est-à-dire une faible contrainte de rupture en compression liée à l'utilisation de fibres textiles qui ont elles-mêmes un faible, voire très faible seuil critique de déformation en compression. Or on sait qu'un emploi en renforcement de ceinture pour pneumatiques radiaux requiert une aptitude suffisante de l'élément de renforcement à résister à la compression.

L'objectif de l'invention est de proposer un pneumatique de moindre poids, ayant d'excellentes propriétés de guidage et de durabilité, en utilisant des éléments composites longilignes. En particulier, l'invention propose de substituer aux câbles aciers de la ceinture des éléments composites longilignes d'allure monofilamentaires, c'est à dire non câblés.

L'invention concerne donc un bandage en élastomère comportant des éléments de renforcement, dans lequel un élément de renforcement au moins est un élément composite longiligne d'allure monofilamentaire, comportant des fibres techniques sensiblement symétriques, lesdites fibres étant en grandes longueurs, lesdites fibres étant imprégnées dans une résine thermodurcie ayant un module initial d'extension valant au moins 2.3 GPa, dans lequel lesdites fibres sont toutes parallèles entre elles, ledit élément composite longiligne ayant une déformation élastique en compression au moins égal à 2%, ayant en flexion une contrainte de rupture en compression supérieure à la contrainte de rupture en extension.

Il s'avère que les fibres de verre conviennent tout particulièrement bien. Certaines fibres de carbone à bas module de Young peuvent aussi convenir. On peut aussi utiliser un ensemble hybride comportant des fibres de verre. De préférence, la résine thermodurcie a une température de transition vitreuse $T_g$ supérieure à 130°C. Avantageusement, le module initial d'extension de la résine thermodurcie vaut au moins 3 GPa. De préférence, ledit élément composite longiligne a une déformation élastique en compression au moins égal à 3%.

On désigne par " bandage " aussi bien les pneumatiques conçus pour fonctionner sous une certaine pression de gonflage nominale que les roues élastiques non pneumatiques (appelées communément " non pneumatic tires ")

L'invention permet par exemple de substituer, dans les deux nappes superposées couramment présentes dans la ceinture, les câbles d'acier par des éléments composites longilignes.

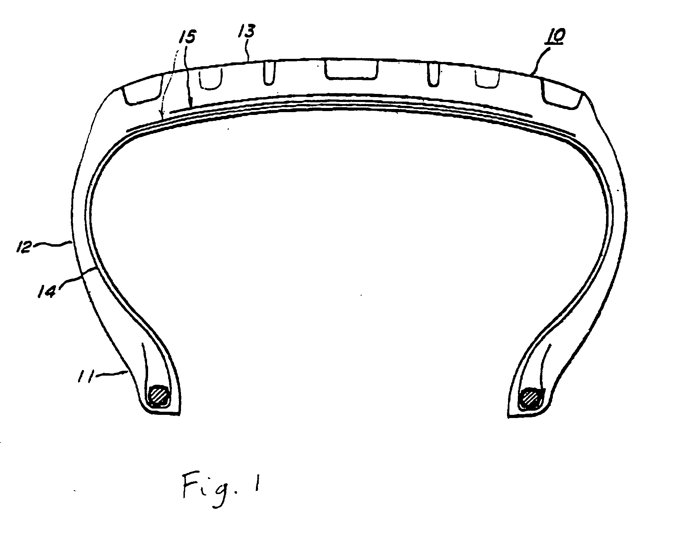

La figure 1 jointe illustre un pneumatique renforcé comme proposé par la présente invention.

Au passage, mentionnons que ledit élément composite longiligne, après avoir été fabriqué par exemple par pultrusion, peut être recouvert d'une couche adhésive, par exemple d'une couche de colle résorcinol formaldéhyde latex (RFL), afin de permettre une bonne adhésion à un élastomère vulcanisable au soufre, comme bien connu en soi.

La figure jointe illustre une application tout particulièrement intéressante, mais non limitative, à un pneumatique 10 pour véhicule de tourisme, comportant une bande de roulement 13, deux flancs 12, une carcasse radiale 14 ancrée de part et d'autre dans un bourrelet 11. Un élément composite longiligne de type monofilamentaire, ayant les propriétés indiquées, renforce la partie du pneumatique située sous la bande de roulement 13.

Dans cette application particulière, ledit élément composite longiligne est disposé en tronçons 15 parallèles allant d'une épaule à l'autre épaule, les tronçons étant arrangés en au moins deux nappes superposées radialement, les tronçons étant disposés en angles de signes contraires d'une nappe à l'autre. Dans cette application aux nappes formant une triangulation avec la carcasse radiale, la valeur absolue dudit angle est typiquement comprise 60° et 10°.

Pour supporter sans dommage de petits rayons de courbure, par exemple caractéristiques du travail des nappes de triangulation de la ceinture d'un pneumatique, il faut trouver une bonne combinaison entre les propriétés de la résine, de l'élément de renforcement et la taille de la section du composite longiligne. Un certain niveau d'aptitude à la déformation en extension de la fibre n'est pas suffisant pour garantir au composite en flexion une performance à la hauteur de l'allongement à la rupture en extension. Les meilleurs résultats en flexion du composite, en terme de déformations relatives, sont obtenus avec des fibres présentant des propriétés mécaniques équilibrées en traction et en compression. La fibre de verre entre dans cette catégorie.

On a fait le choix d'une fibre technique dite sensiblement symétrique, c'est à dire assez bien équilibrée en traction et compression, ce qui lui confère un comportement assez symétrique en sollicitation par flexions alternées, et ainsi une bonne endurance. Avec une fibre mal équilibrée en traction et compression, par exemple de l'aramide, on retrouve immédiatement, en compression du composite, la faiblesse en compression de la fibre textile.

En outre, la résine doit être choisie pour donner en toutes circonstances suffisamment de cohésion entre les fibres textiles. Il convient que la résine assure à tout moment suffisamment de cohésion entre les fibres pour éviter un effondrement rapide en compression suite à un micro flambage des fibres dans la résine.

De préférence, l'élément composite longiligne utilisé est tel que le module initial d'extension vaut au moins 30 GPa, et la contrainte de rupture en compression vaut au moins égale à 0.7 GPa.

Les résines vinyl-esters ou les époxys répondent bien aux souhaits exprimés ci-dessus. L'allongement à la rupture de la résine est de préférence aussi choisi en fonction du potentiel de déformation des fibres. La fibre de verre « E » ou « R » ayant un allongement à la rupture en extension et en compression conséquent, il est possible d'utiliser des éléments composites longilignes d'allure monofilamentaire de section importante, de l'ordre du millimètre si la forme est cylindrique, tout en garantissant un rayon de courbure minimum parfaitement compatible avec les déformations de la ceinture. Ceci procure une rigidité de flexion suffisante pour éviter, lors de sollicitations en forte dérive, des flambages locaux destructifs. La fibre de verre « E » offre un bon compromis entre le prix de revient et les propriétés mécaniques. Ceci n'exclut pas l'utilisation de la fibre de verre « R » pour des applications plus exigeantes. La teneur en fibres est avantageusement comprise entre 30% et 80% de la masse globale de l'élément composite longiligne. De préférence, les fibres sont des fibres de verre et la teneur en fibres est comprise entre 50% et 80% de la masse globale de l'élément composite longiligne. La densité est de préférence inférieure à 2.2, et est avantageusement comprise entre 1.4 et 2.05.

On peut fabriquer avantageusement un tel élément composite longiligne en continu par pultrusion. C'est une technique connue pour permettre de mettre en oeuvre des fibres longues. Il s'agit de dérouler les fibres de longueur illimitée, et de les plonger dans un bain de résine pour en assurer l'imprégnation. Ensuite, on les tire au travers d'une filière chauffée, puis au travers d'une enceinte chauffée où s'effectue la polymérisation. On peut de cette façon tirer en grande longueur et en continu des produits de section quelconque, dictée par la forme de la filière, appelés « éléments composites longilignes d'allure monofilamentaire » ou plus simplement « éléments composites longilignes » dans le présent mémoire. On a utilisé le mot « monofilamentaire » par opposition au concept technologique de « câblé » ou « retors ». En fait, l'élément composite longiligne, vu en section, comporte de nombreux filaments élémentaires noyés dans une résine qui, polymérisée, confère au produit l'aspect d'un brin unique.

Pour la fabrication, on part d'un filé (ou roving) comportant en général un grand nombre (de l'ordre de plusieurs centaines) de filaments élémentaires d'un diamètre de quelques microns, ces filaments étant tous côte à côte, donc sensiblement parallèles entre eux, à quelques chevauchements près. S'il est en effet impossible de garantir un rangement des filaments absolument parfaitement en parallèle, on veut indiquer par l'expression " sensiblement parallèlement entre eux " qu'il ne s'agit pas d'un câblé ou d'une tresse et que les filaments sont disposés parallèlement, à la précision géométrique de l'arrangement près.

Une autre possibilité connue, adaptée notamment à la fabrication discontinue de tronçons d'élément composite longiligne, consiste à disposer les fibres comme on le souhaite dans un moule, à faire le vide et enfin à imprégner les fibres par la résine. Le vide permet une imprégnation des fibres très efficace. Le brevet US 3,730,678 illustre cette technologie d'imprégnation.

Après avoir rappelé que la rigidité de flexion est définie par l'équation $R = E*I$ où E est le module de Young et I le moment d'inertie de la section, dans la comparaison d'un élément composite longiligne selon l'invention et d'un élément de renforcement de type câble d'acier, l'aspect massif (par opposition à un élément de renforcement câblé) permet d'offrir un moment d'inertie de section important, qui compense un module de Young pour l'élément composite longiligne à base de fibres de verre intrinsèquement plus faible que pour un câble en acier. Cependant, en raison des déformations élastiques importantes en traction et en compression de l'élément composite longiligne, l'aspect massif n'est pas rédhibitoire pour les rayons de courbure relativement modérés atteints en particulier dans le renforcement des pneumatiques.

On a comparé un élément composite longiligne à un câble d'acier dans l'application au renforcement sous la bande de roulement d'un pneumatique. La référence pour cette comparaison est un câble d'acier 6.23NF. Sa rigidité " R " vaut : $R \cong 160$ Newton*$mm^2$. Dans cet exemple, le câble non fretté est composé de 6 fils de 0.230 mm de diamètre. Le moment d'inertie de l'assemblage vaut, en valeur approchée, 6 fois le moment d'inertie de chaque fil élémentaire (voir " Platt, M. M., Klein, W. G. and Hamburger, W. J., Textile Research Journal 29, 627 (1959) "). La rigidité d'un élément composite longiligne de 0.9mm de diamètre, ayant une teneur en masse de fibres de 76% (ou masse de filaments) et un module de Young de 40000 MPa est : $R \cong 1170$ Newton*$mm^2$.

Pour vérifier la bonne endurance à la compression de l'élément composite longiligne, dans son application comme élément de renforcement dans le pneumatique, on a soumis un élément composite longiligne de section circulaire, formant une boucle pour le test de boucle cité ci-dessous, à une flexion ondulée culminant à 1.3% de déformation. Après $10^7$ cycles à 1.3% de déformation imposée, la force de traction dont est capable l'élément composite longiligne a perdu moins de 4%. Considérant qu'une déformation de 1.3% est supérieure à la déformation plastique d'un câble usuel en acier, on comprend qu'un tel élément composite longiligne peut se substituer aisément à un câble acier dans une ceinture sous la bande de roulement d'un pneumatique, sans risque d'être pénalisé par les sollicitations répétitives en compression auxquelles est soumis ce type d'élément de renforcement.

Pour illustrer l'invention, on a réalisé deux pneumatiques de dimension 185/65 R14 86V. Dans le premier pneumatique (pneumatique A), conforme à l'invention, un élément composite longiligne de type monofilamentaire est utilisé pour les tronçons 15 (voir figure) dans les nappes sous la bande de roulement 13. Dans le deuxième pneumatique (pneumatique B), non conforme à l'invention, on utilise un câble d'acier à la place de l'élément composite longiligne de type monofilamentaire.

On donne ci-dessous quelques précisions en ce qui concerne les exemples illustrant l'invention, les propriétés mesurées et les méthodes de tests utilisées.

A - <u>Titre des filés :</u> le titre des filés utilisées, exprimé en tex, est celui donné par le fabricant.

B - <u>Masse linéique :</u> la masse linéique des éléments composites longilignes, exprimée en g/m, est déterminée en pesant des échantillons de 10 m de longueur ; le résultat est la moyenne prise sur trois pesées.

C - <u>Densité :</u> on mesure les densités des éléments composites longilignes et de la résine réticulée à l'aide d'une balance spécialisée de la société Mettler Toledo de type PG503 DeltaRange ; les échantillons, de quelques centimètres, sont successivement pesés dans l'air et plongés dans du méthanol ; le logiciel de l'appareil détermine ensuite la densité ; la densité est la moyenne de trois mesures ; la densité de la fibre de verre est celle donnée par le fabricant.

D - <u>Teneur en masse de fibres :</u> la teneur en masse de fibres, exprimée en pour-cent, est calculée en divisant la masse de 1 m de fibres, obtenue à partir du titre, par la masse linéique de l'élément composite longiligne.

E - <u>Température de transition vitreuse (T<sub>g</sub>)</u> : la température de transition vitreuse est mesurée par la méthode de l'analyse thermique différentielle ; la valeur recherchée est choisie par définition au milieu de la transition ; l'appareil utilisé est un calorimètre de la société Mettler.

F - <u>Diamètre</u> : le diamètre de l'élément longiligne composite est déterminé par le calcul à partir de sa masse linéique et de sa masse volumique, selon la formule :

$$D = 2 \, (M_l \, / \, \pi\rho)^{0.5}$$

D représentant le diamètre de l'élément composite longiligne en mm, $M_1$ la masse linéique en g/m et $\rho$ la masse volumique en g/cm$^3$.
La forme de la section de l'élément composite longiligne est vérifiée à l'aide d'un microscope stéréoscopique de la société Leica de type M420.

G - <u>Propriétés mécaniques</u> : les propriétés mécaniques des éléments composites longilignes sont mesurées à l'aide d'une machine de traction de la société Instron de type 4466 ; les éléments mesurés subissent une traction sur une longueur initiale de 400 mm ; tous les résultats sont obtenus avec une moyenne de 10 mesures.

- Le module initial d'extension est déterminé selon le code de calcul 19.3 du logiciel SERIE IX fourni avec la machine de traction. Ce calcul est effectué selon le principe de la norme ASTM D 638.
- La comparaison qualitative des propriétés en compression sont mesurées sur l'élément composite longiligne par la méthode dite du test de boucle (D. Sinclair, J. App. Phys. 21, 380 (1950)). Dans l'utilisation présente de ce test, on réalise une boucle que l'on amène progressivement au point de rupture. La nature de la rupture, facilement observable en raison de la grande taille de la section, permet immédiatement de se rendre compte que l'élément composite longiligne de l'invention, sollicité en flexion jusqu'à rupture, se rompt du côté où la matière est en extension, ce que l'on identifie par simple observation. Etant donné que dans ce cas les dimensions de la boucle sont importantes, il est possible à tout instant de lire le rayon du cercle inscrit dans la boucle. Le rayon du cercle inscrit juste avant le point de rupture correspond au rayon de courbure critique. Il est désigné par R<sub>m</sub>. La formule suivante permet ensuite de déterminer par le calcul la déformation élastique critique :

$$e_{cr} = r \, / \, (R_m + r)$$

où r correspond au rayon de l'élément composite longiligne.
La contrainte de rupture en compression est obtenue par le calcul par la formule suivante :

$$\sigma_c = e_{cr} \, M_i$$

où $M_i$ est le module initial en extension.
Puisque, dans le cas de l'élément composite longiligne selon l'invention, la rupture de la boucle apparaît dans la partie en extension, on conclut que, en flexion, la contrainte de rupture en compression est supérieure à la contrainte de rupture en extension.
On a également procédé à la rupture en flexion d'un barreau rectangulaire selon la méthode dite des trois pannes. Cette méthode correspond à la norme ASTM D 790. Cette méthode permet également de vérifier, visuellement, que la nature de la rupture est bien en extension.

H - <u>Mesure de la poussée de dérive</u>
La mesure de la poussée de dérive est effectuée directement sur véhicule à l'aide d'un moyeu dynamométrique de la société IGEL (Ingenieurgesellschaft für Leichtbau mbH) de la République fédérale d'Allemagne. Cet appareil est muni de capteurs permettant de mesurer les forces dans les directions des trois axes principaux.

Les nappes éléments de renforcement des pneumatiques testés sont constituées comme suit :
pneumatique A

| | |
|---|---|
| Elément composite : | section circulaire de 0.88 mm |
| pas de pose : | 1.8 mm |
| angle entre les nappes : | 23° |
| résistance de nappe : | 444 daN/cm |

pneumatique B

| | |
|---|---|
| câble d'acier : | 6 fils de 0.230 mm câblés |
| pas de pose : | 1.4 mm |
| angle entre les nappes : | 25° |
| résistance de nappe : | 444 daN/cm |

Les poids des pneumatiques sont les suivants :

| | |
|---|---|
| pneumatique A, conforme à l'invention : | 7.65 kg |
| pneumatique B, témoin à fils d'acier : | 8.16 kg |

Après roulage sur véhicule, toutes autres conditions égales par ailleurs, chaque pneumatique développe la même poussée de dérive de 119 daN à 1° d'angle de dérive, illustrant que l'élément composite longiligne de type monofilamentaire de l'invention est adapté à l'application illustrée.

L'invention s'étend à un élément composite longiligne, de longueur très grande par rapport à la section, comportant des fibres techniques sensiblement symétriques, lesdites fibres étant en grandes longueurs, lesdites fibres étant imprégnées dans une résine thermodurcie ayant un module initial d'extension valant au moins 2.3 GPa, dans lequel lesdites fibres sont toutes sensiblement parallèles entre elles, la teneur en fibres étant comprise entre 30% et 80% de la masse globale de l'élément composite longiligne, la densité de l'élément composite longiligne étant inférieure à 2.2, ledit élément composite longiligne ayant en flexion une contrainte de rupture en compression supérieure à la contrainte de rupture en extension, ledit élément composite longiligne ayant une déformation élastique en compression au moins égale à 2%.

Tout comme cela a déjà été dit en lien avec la description du bandage selon l'invention, Il s'avère que les fibres de verre conviennent tout particulièrement bien. De préférence, la résine thermodurcie a une température de transition vitreuse $T_g$ supérieure à 130°C. Avantageusement, le module initial d'extension de la résine thermodurcie vaut au moins 3 GPa. De préférence, les fibres techniques sensiblement symétriques sont des fibres de verre et la teneur en fibres est comprise entre 50% et 80% de la masse globale de l'élément composite longiligne.

On a réalisé un barreau de référence, non conforme à l'invention, comportant une teneur en masse de fibre de verre de 60 % avec une résine bas module ayant les caractéristiques suivantes :

| Composants | Parties pondérales | Module initial | Temperature de transition vitreuse ($T_g$) |
|---|---|---|---|
| | | (GPa) | (°C) |
| | | | |
| Epoxy DER 331 | 100 | 1.5 | 114 |
| HY 917 | 80 | | |
| Benzyldimethylamine | 1 | | |
| Hycar 1300x8 | 50 | | |

En flexion, le barreau de référence présente une rupture du côté sollicité en compression.

Un barreau conforme à l'invention, comportant une teneur en masse de fibre de verre de 70 %, a été réalisé avec une résine ayant les caractéristiques suivantes :

| Composants | Parties pondérales | Module initial | Température de transition vitreuse ($T_g$) |
|---|---|---|---|
| | | (GPa) | (°C) |
| | | | |
| Epoxy DER 331 | 100 | 3.39 | < 124 |
| HY 917 | 80 | | |
| Benzyldimethylamine | 1 | | |
| DY 040 | 30 | | |

Ce barreau conforme à l'invention présente en flexion une rupture du côté sollicité en extension.

Avantageusement, la densité, la valeur minimale de la contrainte de rupture en compression et la valeur minimale du module initial d'extension sont celles déjà indiquées. La section dudit élément composite longiligne est par exemple circulaire, un diamètre typique d'une application au renforcement des pneumatiques étant supérieur à 0.4 mm ou est par exemple oblongue. Un aspect particulier de l'élément composite longiligne a trait à sa déformation élastique en extension, qui est sensiblement égale à sa déformation élastique en compression.

**Revendications**

1.   Bandage en élastomère comportant des éléments de renforcement, dans lequel un élément de renforcement au moins est un élément composite longiligne d'allure monofilamentaire, comportant des fibres techniques sensiblement symétriques, lesdites fibres étant en grandes longueurs, lesdites fibres étant imprégnées dans une résine thermodurcie , dans lequel lesdites fibres sont toutes parallèles entre elles, **caracterisé en ce que** la dite résine thermodurcie a un module initial d'extension valant au moins 2.3 GPa et ledit élément composite longiligne a une déformation élastique en compression au moins égal à 2%, et a en flexion une contrainte de rupture en compression supérieure à la contrainte de rupture en extension.

2.   Bandage selon la revendication 1, dans lequel lesdites fibres techniques sensiblement symétriques sont des fibres de verre.

3.   Bandage selon la revendication 1 ou 2, dans lequel la résine thermodurcie a une température de transition vitreuse $T_g$ supérieure à 130°C.

4.   Bandage selon l'une des revendications 1 à 3, dans lequel le module initial d'extension de la résine thermodurcie vaut au moins 3 GPa.

5.   Bandage selon l'une des revendications 1 à 4, dans lequel ledit élément composite longiligne a une déformation élastique en extension sensiblement égale à la déformation élastique en compression.

6.   Bandage selon l'une des revendications 1 à 5, dans lequel ledit élément composite longiligne est recouvert d'une couche de colle résorcinol formaldéhyde latex (RFL).

7.   Bandage selon l'une des revendications 1 à 6, dans lequel ledit élément composite longiligne renforce la partie du pneumatique située sous la bande de roulement.

8.   Bandage selon l'une des revendications 1 à 7, dans lequel ledit élément composite longiligne est disposé en tronçons parallèles allant d'une épaule à l'autre épaule, les tronçons étant arrangés en au moins deux nappes superposées radialement, les tronçons étant disposés en angles de signes contraires d'une nappe à l'autre.

9.   Bandage selon la revendication 8, dans lequel la valeur absolue dudit angle est comprise entre 60° et 10°.

10.  Bandage selon l'une des revendications 2 à 9, dans lequel la teneur en fibres est comprise entre 30% et 80% de la masse globale de l'élément composite longiligne, la densité de l'élément composite longiligne étant inférieure à 2.2.

11.  Bandage selon la revendication 10, dans lequel les fibres sont des fibres de verre et la teneur en fibres est comprise entre 50% et 80% de la masse globale de l'élément composite longiligne.

**12.** Bandage selon l'une des revendication 1 à 11, dans lequel le module initial d'extension vaut au moins 30 GPa.

**13.** Bandage selon l'une des revendications 1 à 12, dans lequel l'élément composite longiligne a une contrainte de rupture en compression au moins égale à 0.7 GPa.

**14.** Bandage selon l'une des revendications 1 à 13, dans lequel l'élément composite longiligne a une section circulaire.

**15.** Bandage selon la revendication 14, dans lequel le diamètre de ladite section circulaire est supérieur à 0.4 mm.

**16.** Bandage selon l'une des revendications 1 à 15, dans lequel ledit élément composite longiligne a une déformation élastique en compression au moins égal à 3%

**17.** Élément composite longiligne d'allure monofilamentaire, de longueur très grande par rapport à la section, comportant des fibres techniques sensiblement symétriques, lesdites fibres étant en grandes longueurs, lesdites fibres étant imprégnées dans une résine thermodurcie, dans lequel lesdites fibres sont toutes parallèles entre elles, **caractérisé en ce que** la résine thermodurcie a un module initial d'extension valant au moins 2.3 GPa, la teneur en fibres est comprise entre 60% et 80% de la masse globale, la densité étant inférieure à 2.2, ledit élément composite longiligne a en flexion une contrainte de rupture en compression supérieure à la contrainte de rupture en extension, et a une déformation élastique en compression au moins égal à 2%.

**18.** Élément composite longiligne selon la revendication 17, dans lequel lesdites fibres techniques sensiblement symétriques sont des fibres de verre.

**19.** Élément composite longiligne selon la revendication 17 ou 18, dans lequel la résine thermodurcie a une température de transition vitreuse $T_g$ supérieure à 130°C.

**20.** Élément composite longiligne selon l'une des revendications 17 à 19, dans lequel le module initial d'extension de la résine thermodurcie vaut au moins 3 GPa .

**21.** Élément composite longiligne selon l'une des revendications 17 à 20, dont la densité est comprise entre 1.4 et 2.05.

**22.** Élément composite longiligne selon l'une des revendications 17 à 21, ayant une déformation élastique en extension sensiblement égale à la déformation élastique en compression.

**23.** Élément composite longiligne selon l'une des revendications 17 à 22, dans lequel le module initial d'extension vaut au moins 30 GPa.

**24.** Élément composite longiligne selon l'une des revendications 17 à 23, ayant une contrainte de rupture en compression au moins égale à 0.7 GPa.

**25.** Élément composite longiligne selon l'une des revendications 17 à 24, ayant une section circulaire.

**26.** Élément composite longiligne selon la revendication 25, dans lequel le diamètre de ladite section circulaire est supérieur à 0.4 mm.

**27.** Élément composite longiligne selon l'une des revendications 17 à 26, ayant une déformation élastique en compression au moins égale à 3%.

**Claims**

**1.** A tyre of elastomer comprising reinforcement elements, in which at least one reinforcement element is an elongate composite element of monofilament appearance, comprising substantially symmetrical technical fibres, said fibres being of great lengths, said fibres being impregnated in a thermoset resin, in which said fibres are all parallel to each other, **characterised in that** said thermoset resin has an initial modulus of extension of at least 2.3 GPa, said elongate composite element has an elastic deformation in compression at least equal to 2%, and has in flexion a breaking stress in compression greater than the breaking stress in extension.

2. A tyre according to Claim 1, in which said substantially symmetrical technical fibres are glass fibres.

3. A tyre according to Claim 1 or 2, in which the thermoset resin has a glass transition temperature $T_g$ greater than 130°C.

4. A tyre according to one of Claims 1 to 3, in which the initial modulus of extension of the thermoset resin is at least 3 GPa.

5. A tyre according to one of Claims 1 to 4, in which said elongate composite element has an elastic deformation in extension which is substantially equal to the elastic deformation in compression.

6. A tyre according to one of Claims 1 to 5, in which said elongate composite element is covered with a layer of resorcinol-formaldehyde latex (RFL) glue.

7. A tyre according to one of Claims 1 to 6, in which said elongate composite element reinforces that part of the tyre which is located beneath the tread.

8. A tyre according to one of Claims 1 to 7, in which said elongate composite element is arranged in parallel lengths extending from one shoulder to the other, the lengths being arranged in at least two plies which are superposed radially, the lengths being arranged at angles of contrary signs from one ply to the other.

9. A tyre according to Claim 8, in which the absolute value of said angle is between 60° and 10°.

10. A tyre according to one of Claims 2 to 9, in which the fibre content is between 30% and 80% of the overall weight of the elongate composite element, the density of the elongate composite element being less than 2.2.

11. A tyre according to Claim 10, in which the fibres are glass fibres and the fibre content is between 50% and 80% of the overall weight of the elongate composite element.

12. A tyre according to one of Claims 1 to 11, in which the initial modulus of extension is at least 30 GPa.

13. A tyre according to one of Claims 1 to 12, in which the elongate composite element has a breaking stress in compression at least equal to 0.7 GPa.

14. A tyre according to one of Claims 1 to 13, in which the elongate composite element has a circular section.

15. A tyre according to Claim 14, in which the diameter of said circular section is greater than 0.4 mm.

16. A tyre according to one of Claims 1 to 15, in which said elongate composite element has an elastic deformation in compression at least equal to 3%.

17. An elongate composite element of monofilament appearance, of a length which is very great relative to its section, comprising substantially symmetrical technical fibres, said fibres being of great lengths, said fibres being impregnated in a thermoset resin, in which said fibres are all parallel to each other, **characterised in that** the thermoset resin has an initial modulus of extension of at least 2.3 GPa, the fibre content is between 60% and 80% of the overall weight, the density being less than 2.2, said elongate composite element has in flexion a breaking stress in compression greater than the breaking stress in extension, and has an elastic deformation in compression at least equal to 2%.

18. An elongate composite element according to Claim 17, in which said substantially symmetrical technical fibres are glass fibres.

19. An elongate composite element according to Claim 17 or 18, in which the thermoset resin has a glass transition temperature $T_g$ greater than 130°C.

20. An elongate composite element according to one of Claims 17 to 19, in which the initial modulus of extension of the thermoset resin is at least 3 GPa.

21. An elongate composite element according to one of Claims 17 to 20, the density of which is between 1.4 and 2.05.

22. An elongate composite element according to one of Claims 17 to 21, having an elastic deformation in extension which is substantially equal to the elastic deformation in compression.

23. An elongate composite element according to one of Claims 17 to 22, in which the initial modulus of extension is at least 30 GPa.

24. An elongate composite element according to one of Claims 17 to 23, having a breaking stress in compression at least equal to 0.7 GPa.

25. An elongate composite element according to one of Claims 17 to 24, having a circular section.

26. An elongate composite element according to Claim 25, in which the diameter of said circular section is greater than 0.4 mm.

27. An elongate composite element according to one of Claims 17 to 26, having an elastic deformation in compression at least equal to 3%.

**Patentansprüche**

1. Reifen aus Elastomer, der Verstärkungselemente enthält, in dem mindestens ein Verstärkungselement ein langgezogenes Verbundelement mit monofilamentärem Aussehen ist, das in etwa symmetrische technische Fasern enthält, wobei die Fasern in großen Längen vorliegen, wobei die Fasern in ein warmgehärtetes Harz eingebettet sind, wobei in dem Verbundelement alle Fasern parallel zueinander sind, **dadurch gekennzeichnet, dass** das warmgehärtete Harz ein Anfangsdehnmodul aufweist, das mindestens 2,3 GPa beträgt, dass das langgezogene Verbundelement eine elastische Verformung bei Kompression von mindestens 2 % aufweist und beim Biegen eine Bruchspannung bei Kompression aufweist, die größer als die Bruchspannung bei Dehnung ist.

2. Reifen nach Anspruch 1, in dem die in etwa symmetrischen technischen Fasern Glasfasern sind.

3. Reifen nach Anspruch 1 oder 2, in dem das warmgehärtete Harz eine Glasübergangstemperatur $T_g$ oberhalb von 130 °C aufweist.

4. Reifen nach einem der Ansprüche 1 bis 3, in dem das Anfangsdehnmodul des warmgehärteten Harzes mindestens 3 GPa beträgt.

5. Reifen nach einem der Ansprüche 1 bis 4, in dem das langgezogene Verbundelement eine elastische Verformung bei Dehnung aufweist, die in etwa gleich groß wie die elastische Verformung bei Kompression ist.

6. Reifen nach einem der Ansprüche 1 bis 5, in dem das langgezogene Verbundelement von einer Schicht aus Resorcin-Formaldehyd-Latex-Klebstoff (RFL) überzogen ist.

7. Reifen nach einem der Ansprüche 1 bis 6, in dem das langgezogene Verbundelement den Teil des Luftreifens verstärkt, der unter dem Laufstreifen liegt.

8. Reifen nach einem der Ansprüche 1 bis 7, in dem das langgezogene Verbundelement in parallelen Stücken angeordnet ist, die von der einen Schulter bis zur anderen Schulter reichen, wobei die Stücke in mindestens zwei radial übereinander liegenden Lagen angeordnet sind, wobei die Stücke von einer Lage zur anderen Lage unter Winkeln mit entgegengesetztem Vorzeichen angeordnet sind.

9. Reifen nach Anspruch 8, in dem der Absolutwert des Winkels im Bereich von 60 bis 10° liegt.

10. Reifen nach einem der Ansprüche 2 bis 9, in dem der Gehalt an Fasern im Bereich von 30 bis 80 % der Gesamtmasse des langgezogenen Verbundelements liegt, wobei die Dichte des langgezogenen Verbundelements kleiner als 2,2 ist.

**11.** Reifen nach Anspruch 10, in dem die Fasern Glasfasern sind und der Gehalt an Fasern im Bereich von 50 bis 80 % der Gesamtmasse des langgezogenen Verbundelements liegt.

**12.** Reifen nach einem der Ansprüche 1 bis 11, wobei das Anfangsdehnmodul mindestens 30 GPa beträgt.

**13.** Reifen nach einem der Ansprüche 1 bis 12, in dem das langgezogene Verbundelement eine Bruchspannung bei Kompression von mindestens 0,7 GPa aufweist.

**14.** Reifen nach einem der Ansprüche 1 bis 13, in dem das langgezogene Verbundelement einen kreisförmigen Querschnitt hat.

**15.** Reifen nach Anspruch 14, in der der Durchmesser des kreisförmigen Querschnitts größer als 0,4 mm ist.

**16.** Reifen nach einem der Ansprüche 1 bis 15, in dem das langgezogene Verbundelement eine elastische Verformung bei Kompression von mindestens 3 % aufweist.

**17.** Langgezogenes Verbundelement mit monofilamentärem Aussehen mit sehr großer Länge, bezogen auf den Querschnitt, das in etwa symmetrische technische Fasern enthält, wobei die Fasern in großen Längen vorliegen, wobei die Fasern in ein warmgehärtetes Harz eingebettet sind, wobei in dem Verbundelement alle Fasern parallel zueinander sind, **dadurch gekennzeichnet, dass** das warmgehärtete Harz ein Anfangsdehnmodul aufweist, das mindestens 2,3 GPa beträgt, dass der Gehalt an Fasern im Bereich von 60 bis 80 % der Gesamtmasse liegt, wobei die Dichte unter 2,2 liegt, dass das langgezogene Verbundelement beim Biegen eine Bruchspannung bei Kompression aufweist, die größer als die Bruchspannung bei Dehnung ist, und eine elastische Verformung bei Kompression von mindestens 2 % aufweist.

**18.** Langgezogenes Verbundelement nach Anspruch 17, in dem die in etwa symmetrischen technischen Fasern Glasfasern sind.

**19.** Langgezogenes Verbundelement nach Anspruch 17 oder 18, in dem das warmgehärtete Harz eine Glasübergangstemperatur Tg oberhalb von 130 °C aufweist.

**20.** Langgezogenes Verbundelement nach einem der Ansprüche 17 bis 19, in dem das Anfangsdehnmodul des warmgehärteten Harzes mindestes 3 GPa beträgt.

**21.** Langgezogenes Verbundelement nach einem der Ansprüche 17 bis 20, dessen Dichte im Bereich von 1,4 bis 2,05 liegt.

**22.** Langgezogenes Verbundelement nach einem der Ansprüche 17 bis 21, das eine elastische Verformung bei Dehnung aufweist, die in etwa gleich groß wie die elastische Verformung bei Kompression ist.

**23.** Langgezogenes Verbundelement nach einem der Ansprüche 17 bis 22, wobei das Anfangsdehnmodul mindestens 30 GPa beträgt.

**24.** Langgezogenes Verbundelement nach einem der Ansprüche 17 bis 23, das eine Bruchspannung bei Kompression von mindestens 0,7 GPa aufweist.

**25.** Langgezogenes Verbundelement nach einem der Ansprüche 17 bis 24, das einen kreisförmigen Querschnitt hat.

**26.** Langgezogenes Verbundelement nach Anspruch 25, in dem der Durchmesser des Querschnitts größer als 0,4 mm ist.

**27.** Langgezogenes Verbundelement nach einem der Ansprüche 17 bis 26, das eine elastische Verformung bei Kompression von mindestens 3 % aufweist.

Fig. 1